# EUROPÄISCHE PATENTSCHRIFT

(11) **EP 1 451 919 B1**
(45) Veröffentlichungstag und Bekanntmachung des Hinweises auf die Patenterteilung: **27.10.2010**
(21) Anmeldenummer: 02792636.9
(22) Anmeldetag: 06.12.2002
(51) Int. Cl.: H02K 7/18

(54) **LINEARER GENERATOR MIT SCHWINGENDEM KOLBEN**
LINEAR GENERATOR WITH A SWINGING PISTON
GENERATEUR LINEAIRE A PISTON OSCILLANT

(30) Priorität: 07.12.2001 AT 19272001; 06.03.2002 DE 10209858
(43) Veröffentlichungstag der Anmeldung: 01.09.2004
(73) Patentinhaber: Otag GmbH & Co. KG, 59939 Olsberg (DE); Button Energy Energiesysteme GmbH, 1140 Wien (AT)
(72) Erfinder: KNOPF, Richard, Matthias, A-1140 Wien (AT); SCHULTE, Franz, Josef, 59939 Olsberg (DE)
(74) Vertreter: Dantz, Jan Henning
(86) Internationale Anmeldenummer: PCT/DE2002/004481
(87) Internationale Veröffentlichungsnummer: WO 2003/050929

(56) Entgegenhaltungen:
- US-A- 4 532 431

## Beschreibung

Die Erfindung betrifft einen elektromechanischen Energiewandler nach Art eines mit einem Freikolben versehenen Lineargenerators.

Im Gegensatz zu herkömmlichen elektromechanischen Energiewandlern kommen mit freischwingenden Arbeitskolben versehene Lineargeneratoren ohne Drehbewegungen und die dafür benötigten Kurbeltriebe oder dgl. aus. Die Energiewandlung wird hier durch eine lineare Hin- und Herbewegung eines häufig als Freikolben bezeichneten Arbeitskolbens erzeugt. Die Umwandlung der mechanischen Energie in elektrische Energie erfolgt dadurch, daß der Arbeitskolben mit einer Vielzahl von Magneten wechselnder Polarität versehen und in einer ihn umgebenden Wicklung angeordnet wird (DD 113 593, DE 43 15 046 A1, DE 199 43 993 A1). Entsprechend wird bei elektromechanischen Wandlern vorgegangen, die nicht als elektrische Generatoren, sondern als elektrische Linearmotoren arbeiten (DE 41 07 530 A1) oder die wahlweise der elektrischen oder mechanischen Energieerzeugung dienen (EP 0 185 656 B1).

Wegen der Vielzahl von am Arbeitskolben montierten Permanentmagneten und der dadurch bedingten Massenträgheit müssen hohen Beschleunigungs- bzw. Abbremskräfte aufgebracht werden, was niedrige Arbeitsfrequenzen zu Folge hat. Üblicherweise werden bei diesen sog. Feldverdrängern spiegelverkehrt oder rotationssymmetrisch angeordnete Magnetpaarungen verwendet, um Seitenkräfte im Idealfall zu verhindern. Durch Fertigungstoleranzen ist dies allerdings nicht vollständig erreichbar und wird durch geringsten Verschleiß zunehmend die Lager belasten. Diese Belastungen potenzieren sich dann. Aufwendige Konstruktionen erhöhen jedoch die Störanfälligkeit, was einem wartungsfreien Lauf des Arbeitskolbens über mehrere Jahre hinweg entgegensteht.

Es sind daher auch bereits Energiewandler der beschriebenen Art bekannt geworden (US-PS 4 532 431, WO 94/26019), bei denen die Arbeitskolben lediglich mit einer eisenlosen Ankerspule verbunden sind, die im Luftspalt von zwei einander gegenüberliegend angeordneten, topfförmig ausgebildeten Statorteilen verschiebbar gelagert ist. Obwohl eine solche Anordnung im Hinblick auf die aufzuwendenden Beschleunigungs- und Abbremkräfte erhebliche Vorteile bietet, haben sich derartige Energiewandler bisher nicht am Markt durchgesetzt. Ein Hauptgrund hierfür ist darin zu sehen, daß die vom gas- bzw. dampfförmigen Medium beaufschlagten Kolbenböden in außerhalb des Stators angeordneten Kammern verschiebbar gelagert sind, wodurch sich Abdichtungsprobleme ergeben, was einem mehrjährigen störungs- und wartungsfreien Lauf des Kolbens entgegenwirkt. Außerdem ist es bei diesen Energiewandlern nicht ohne weiteres möglich, das gas- oder dampfförmige Medium im Kreislauf zu führen, eine kompakte, platzsparende Bauweise zu realisieren und die bei Betrieb auftretenden Kühlprobleme zu lösen.

Das von der vorliegenden Erfindung zu lösende technische Problem besteht daher darin, einen elektromechanischen Energiewandler der eingangs bezeichneten Gattung so auszubilden, daß unter Vermeidung der genannten Nachteile das Auftreten von Dichtproblemen vermieden und eine einfache, platzsparende Konstruktion erreicht werden kann, die eine große Laufruhe und einen langen, wartungsfreien Betrieb ermöglicht.

Zur Lösung dieses Problems dienen die Merkmale des Anspruchs 1.

Die Erfindung bringt den Vorteil mit sich, daß das gas- bzw. dampfförmige Medium nach seiner Expansion in den vom Stator umschlossenen Arbeitsraum eingeleitet wird. Dies ermöglicht die Schaffung eines kompakten, geschlossenen Systems mit einem gemeinsamen Kühlraum, der einerseits zur Kühlung der Komponenten des elektromechanischen Wandlers (Erregerspulen, Ankerspule usw.), andererseits aber auch zur Kühlung und Kondensation des gas- oder dampfförmigen Mediums benutzt werden kann. Weitere Vorteile bestehen darin, daß der Kolben kurz und ohne gesonderte Lager ausgeführt werden kann, was einen dauerhaften, wartungsfreien Lauf des Kolbens ermöglicht, und keine außen liegenden Kammern vorgesehen werden brauchen, so daß keine Dichtprobleme auftreten können.

Weitere vorteilhafte Merkmale der Erfindung ergeben sich aus den Unteransprüchen.

Die Erfindung wird nachfolgend in Verbindung mit den beiligenden Zeichnungen an Ausführungsbeispielen näher erläutert. Es zeigen:
Fig. 1 den Grundaufbau des Stators eines erfindungsgemäßen elektromechanischen Wandlers in einem schematischen Längsschnitt;
Fig. 2 einen Schnitt längs der Linie II - II der Fig. 1;
Fig. 3 in einem gegenüber Fig. 1 etwas veränderten Maßstab einen Längsschnitt durch einen mit einer Ankerspule verbundenen Arbeitskolben für den erfindungsgemäßen Wandler;
Fig. 4 und 5 schematische Teildiagramme von zwei möglichen Ausführungsbeispielen für eine mit dem erfindungsgemäßen Wandler betriebene Vorrichtung;
Fig. 6 einen Längsschnitt durch ein Ausführungsbeispiel eines kompletten Wandlers;
Fig. 7 und 8 schematische Schnitte durch ein Ventil des Wandlers nach Fig. 6 in je einer Geschlossen- bzw. Offenstellung;
Fig. 9 und 10 die Teilansichten des Wandlers nach Fig. 6 in zwei unterschiedlichen Betriebsstellungen eines Arbeitskolben;
Fig. 11 einen Längsschnitt durch ein zweites Ausführungsbeispiel eines kompletten Wandlers;
Fig. 12 eine vergrößerte Einzelheit X der Fig. 6 mit einer Zuführleitung für ein Kühl- und/oder Schmiermittel;
Fig. 13 einen Schnitt längs der Linie XIII - XIII der Fig. 9 und
Fig. 14 einen Schnitt längs der Linie XIV - XIV der Fig. 13.

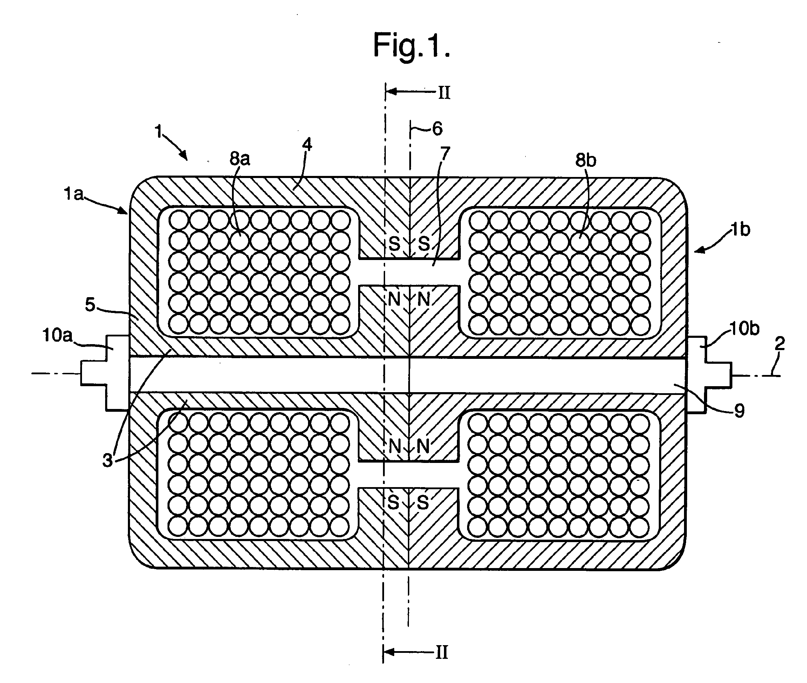

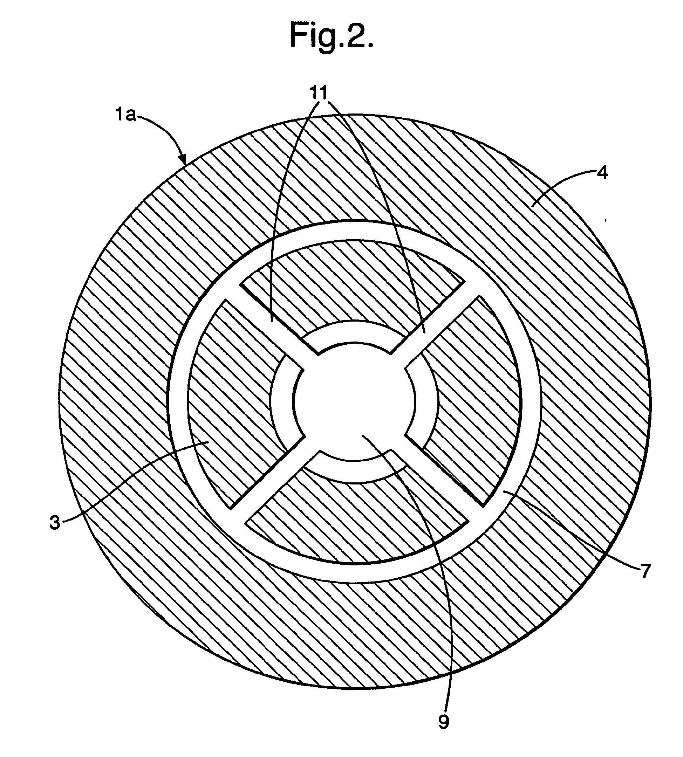

Nach Fig. 1 und 2 enthält ein erfindungsgemäßer elektromechanischer Energiewandler einen Stator 1, der zwei topfförmige, aus Weicheisen oder dgl. hergestellte Statorteile 1a und 1b aufweist. Das Statorteil 1a enthält einen mittleren, zu einer Längsachse 2 des Wandlers koaxialen Polschuh 3 und einen diesen ringförmig und koaxial umgebenden, äußeren Polschuh 4. Der mittlere Polschuh 3 ist vorzugsweise im wesentlichen zylindrisch ausgebildet. Dagegen ist der äußere Polschuh 4 vorzugsweise hohlzylindrisch ausgebildet und an einem Ende durch einen Boden 5 geschlossen. An der dem Boden 5 gegenüberliegenden, offenen Seite des so gebildeten Topfs grenzen die beiden Polschuhe 3,4 zweckmäßig an eine ebene Stirnseite. Zwischen den Polschuhen 3,4 besteht ein ringförmiger, umlaufender Spalt. Das Statorteil 1b ist zweckmäßig identisch und wie das Statorteil 1a rotationssymmetrisch zur Längsachse 2 ausgebildet.

Wie Fig. 1 und 2 weiter zeigen, grenzen die beiden Statorteile 1a, 1b mit ihren an den offenen Seiten liegenden Stirnflächen längs einer durch eine Linie 6 angedeuteten Symmetrieebene aneinander, so daß sie einerseits spiegelsymmetrisch zur Symmetrieebene 6 und andererseits koaxial zur Längsachse 2 angeordnet sind. Ihre zwischen den Polschuhen 3,4 befindlichen Spalte ergänzen sich daher zu einem insgesamt mit dem Bezugszeichen 7 bezeichneten Luftspalt.

In einer zwischen dem mittleren Polschuh 3 und dem äußeren Polschuh 4 befindlichen Bereich weisen die Statorteile 1a, 1b Aussparungen aus, in denen Wicklungen 8a, 8b angeordnet sind, die in nicht näher dargestellter Weise an eine Gleichspannungsquelle angeschlossen werden. Dabei wird die Polung des von den Wicklungen 8a, 8b erzeugten Magnetfelds z.B. so gewählt, daß z.B. am mittleren Polschuh 3 ein Nordpol N und am äußeren Polschuh 4 ein Südpol S entsteht (Fig. 1), obwohl die Polarität auch umgekehrt sein könnte. Außerdem ist klar, daß der Stator 1 auch durch Permanentmagnete erregt werden könnte, in welchem Fall die Wicklungen 8a, 8b entfallen würden.

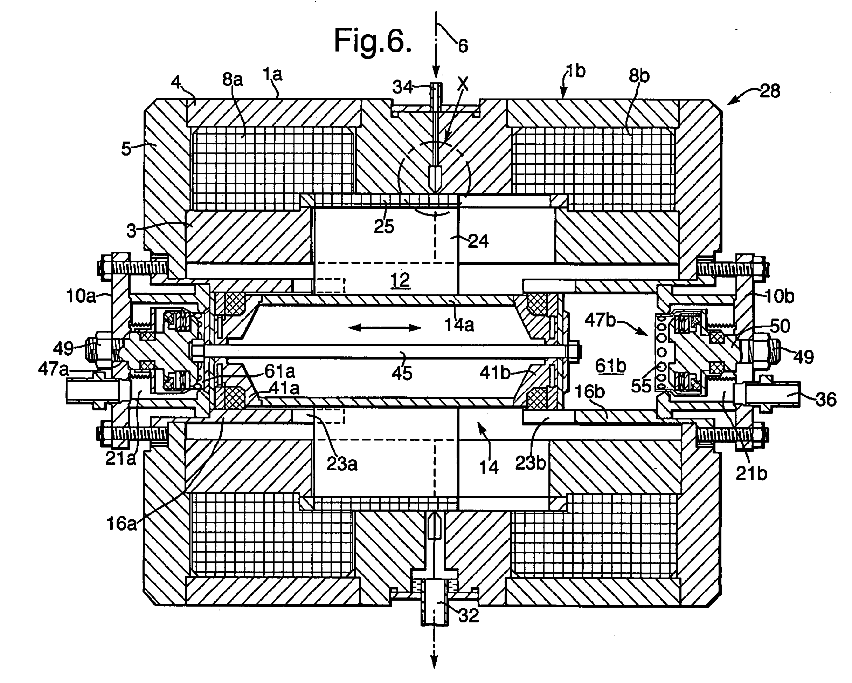

Schließlich zeigen Fig. 1 und 2, daß der mittlere Polschuh 3 jedes Statorteils 1a, 1b einerseits mit einer zentralen Ausnehmung, andererseits mit kreuzförmig angeordneten Schlitzen 11 versehen ist. Die Ausnehmungen sind koaxial zur Längsachse 2 angeordnet, an ihren äußeren Enden mit je einem schematisch angedeuteten Deckel 10a, 10b verschlossen und axial durchgehend ausgebildet, so daß sie einen zwischen den Deckeln 10a, 10b verlaufenden Durchgang 9 bilden. Die Schlitze 11 verlaufen dagegen senkrecht zur Symmetrieebene 6 und radial zum Luftspalt 7 (Fig. 2), so daß sie diesen mit dem Durchgang 9 verbinden. Dadurch entsteht in den mittleren Polschuhen 3 ein von dem Durchgang 9 und den Schlitzen 11 gebildeter, zusammenhängender und nur in Fig. 6 angedeuteter Arbeitsraum 12.

Ein wesentlicher Vorteil der beiden baugleichen, in der Symmetrieebene 6 aneinander stoßenden Statorteilen 1a, 1b besteht darin, daß außerhalb des Luftspalts 7 keine Streufelder entstehen. Die von den beiden Statorteilen 1a, 1b ausgehenden Feldlinien werden vielmehr in die Eisenteile zurück gedrängt und daher voll im Luftspalt 7 wirksam gemacht, so daß dieser auf der gesamten Länge gleichmäßig magnetisch durchflutet wird und sich ein hoher Wirkungsgrad ergibt.

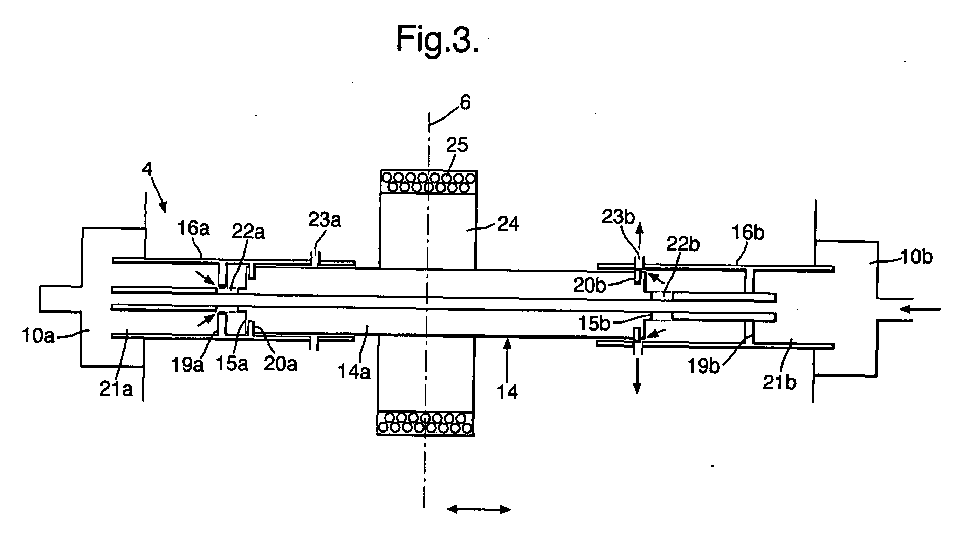

Fig. 3 zeigt einen freischwingend im Durchgang 9 anzuordnenden Kolben 14 des erfindungsgemäßen Wandlers. Der Kolben 14 weist wie der Durchgang 9 vorzugsweise einen kreisförmigen Querschnitt auf und ist in einem mittleren Teil als Rohr 14a ausgebildet. An den beiden Enden ist dieses Rohr 14a durch je einen Kolbenboden 15a, 15b verschlossen und in je einem Zylinderabschnitt 16a, 16b mit Gleitsitz hin und her verschiebbar gelagert, wobei die Zylinderabschnitte 16a, 16b abgedichtet in den zentralen Ausnehmungen der zugehörigen Polschuhe 3 angeordnet und z.B. mit Schrauben an diesen befestigt sind. Die Zylinderabschnitte 16a, 16b könnten alternativ einen durchgehenden Zylinder bilden, sind aus praktischen Gründen jedoch geteilt, damit jeder Zylinderabschnitt 16a, 16b zur Durchführung von Wartungs- und Reparaturarbeiten einzeln für sich axial nach außen herausgenommen bzw. wieder eingesetzt werden kann.

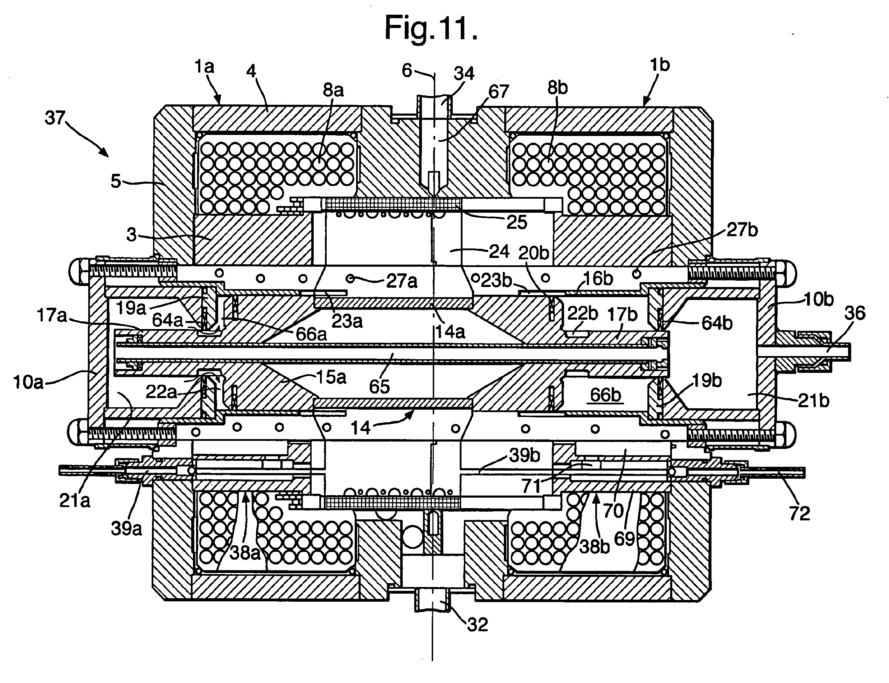

Der üblicherweise als Freikolben bezeichnete Kolben 14 weist im Ausführungsbeispiel von seinen Kolbenböden 15a, 15b nach außen abstehende, koaxiale Führungsansätze bzw. Schieber 17a, 17b von verringertem Querschnitt auf, die in Führungsöffnungen von quer in den Zylinderabschnitten 16a, 16b angeordneten Stirnscheiben 19a, 19b koaxial verschiebbar gelagert sind. Außerdem ist der Kolben 14 mit Hilfe von umlaufenden Dichtungen 20a, 20b, die in der Nähe der Kolbenböden 15a, 15b von seinem Umfang radial abstehen, gegen die Zylinderabschnitte 16a, 16b abgedichetet, so daß zwischen den Kolbenböden 15a, 15b und den zugehörigen Deckeln 10a, 10b jeweils Druckkammern 21a, 21b entstehen. Diese dienen zur Aufnahme eines gas- oder dampfförmigen Mediums, um den Kolben 14 in an sich bekannter Weise freischwingend in eine hin- und hergehende Bewegung zu versetzen oder - wenn der Kolben angestrieben wird - das in den Druckräumen 21a, 21b befindliche Medium nach Art eines Kompressors oder dgl. periodisch zu komprimieren bzw. zu entspannen. Die Steuerung des Bewegungsspiels des Kolbens 14 kann, wie weiter unten anhand der Fig. 11 näher erläutert wird, z.B. mit Hilfe von in dessen Außenmantel angebrachten und am Umfang verteilt angeordneten Steuerschlitzen 22a und 22b, der Stirnscheiben 19a, 19b und von in den Zylinderabschnitten 16a, 16b ausgebildeten Auslaßschlitzen 23a und 23b erfolgen, die an den der Symmetrieebene 6 zugewandten Enden der Zylinderabschnitte 16a, 16b ausgebildet und in Umfangsrichtung verteilt angeordnet sind. Die Teile 17a, 17b, 19a, 19b, 22a, 22b, 23a und 23b stellen dabei die Steuermittel einer weiter unter erläuterten Schiebersteuerung dar. Wichtig ist dabei, daß die Auslaßschlitze 23a, 23b zum Arbeitsraum 12 hin geöffnet sind.

Der Kolben 14 ist in einem mittleren Abschnitt mit kreuzförmig angeordneten und radial nach außen abstehenden Stegen 24 versehen, deren Form und Größe so bemessen sind, daß sie von je einem zugeordneten Führungsschlitz 11 aufgenommen und in diesem beim Hin- und Herbewegen des Kolbens 14 hin- und herbewegt werden können. An ihren radial äußeren Enden sind die Stege 24 an der Innenseite einer koaxial im Luftspalt 7 anzuordnenden Ankerspule 25 befestigt, deren Größe und Form so bemessen sind, daß sie nach Art einer Tauchspule axiale Bewegungen des Arbeitskolbens 14 im Luftspalt 7 mitmachen kann.

Die Ankerspule 25 ist erfindungsgemäß im wesentlichen eisenfrei und daher von geringem Gewicht, so daß weder hohe Beschleunigungskräfte aufzubringen sind noch radiale Querkräfte bei der Bewegung der Ankerspule 25 im Luftspalt 7 auftreten. Außerdem bilden der Kolben 14, die Stege 24 und die Ankerspule 25 eine zusammenhängende Einheit, der wegen der Anwendung einer eisenfreien Ankerspule 25 auch insgesamt vergleichsweise leicht ausgebildet werden kann, insbesondere wenn der Kolben 14 und die Stege 24 z.B. aus Aluminium, Faserverbundmaterial oder dgl. hergestellt werden. Dadurch können bei der praktischen Umsetzung hohe Arbeitsfrequenzen erzielt werden.

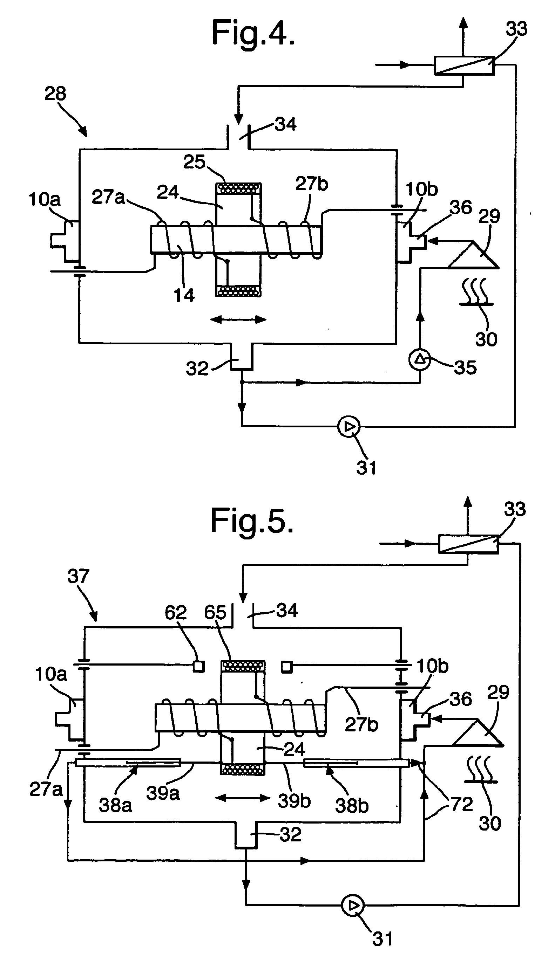

Wie Fig. 4 schematisch zeigt, ist der Kolben 14 von zwei als Schraubenfedern ausgebildeten Federn 27a, 27b umgeben, die mit ihren inneren Enden an je einem zugeordneten Anschluß der Ankerspule 25 befestigt sind, mit ihren äußeren Enden dagegen nach außen aus dem Wandler herausführen. Außerdem sind die Federn 27a, 27b so mit dem Kolben 14 und stationären Teilen im Arbeitsraum 12 verbunden, daß sie, wenn der Wandler nicht in Betrieb ist, eine definierte Mittellage des Kolbens 14 und der Ankerspule 15 festlegen, was für eine Start- bzw. Anlaufphase des Wandlers günstig ist. Die Federn 27a, 27b dienen daher sowohl dem elektrischen Anschluß der Ankerspule 25 unter Vermeidung von Schleifkontakten oder dgl. als auch zu deren Mittenzentrierung.

Bei dem in Fig. 4 dargestellten Ausführungsbeispiel ist ein erfindungsgemäßer, entsprechend Fig. 1 bis 3 ausgebildeter Wandler 28 als Teil eines elektrischen Generators oder dgl. dargestellt, der z. B. in einem Ein- oder Zweifamilienhaus zur zusätzlichen Stromerzeugung angewendet werden kann. Daneben sind Anwendungen im Inselbetrieb (Hütten, Yachten, Wohnmobile oder dgl.) oder in Ländern ohne zentrale Stromversorgung denkbar. Der Wandler 28 wird in diesem Fall z. B. mit Wasserdampf betrieben, der z. B. in einem Verdampfer 29 mit dem erforderlichen Druck von z. B. 30 bar bis 50 bar und der erforderlichen Temperatur von z. B. 200 °C bis 350 °C erzeugt wird. Dabei wird der Verdampfer 29 z. B. als Zusatzbauteil eines üblichen, bei Heizungsanlagen im Wohnbereich meistens ohnehin vorhandenen Öl- oder Gasbrenners 30 ausgebildet, der zum Betreiben einer üblichen Öl- oder Gasheizung dient und dessen Flamme auch zur Dampferzeugung verwendet werden kann.

Der Wandler 28 ist vorzugsweise mit zwei im Wandler verbundenen Kreisläufen versehen, die beide Dampf bzw. Wasser führten. Ein erster Kreislauf dient als Kühl-und/oder Schmiermittel-Kreislauf. Er enthält eine Pumpe 31, die ein den Arbeitsraum 12 des Wandlers 28 durchströmendes Kühl-und/oder Schmiermittel, hier Wasser, von einer im Stator 1 ausgebildeten Entnahmeleitung 32 abzieht und einem Wärmeaustauscher 33 zuführt, der z. B. die Erwärmung von Brauchwasser durch eine Wohnraumheizungsanlage unterstützt. Das im Wärmeaustauscher 33 abgekühlte Wasser wird dem Wandler 28 durch eine Zuführleitung 34 des Stators 1 erneut als Kühl-und/oder Schmiermittel zugeführt. Dagegen enthält der zweite Kreislauf eine Pumpe 35, die ebenfalls durch die Entnahmeöffhung 32 Wasser aus dem Wandler 28 abzieht, dieses aber direkt dem Verdampfer 29 zuführt, wo es erneut verdampft und einem Anschluß 36 im Deckel 10a und/oder 10b als dampfförmiges Arbeitsmedium zugeführt wird. Der Dampf dient dabei, wie weiter unten erläutert wird, zum Antrieb des Kolbens 14. Nach der Arbeitsleistung kondensiert der Dampf wieder zu Wasser und wird wie das als Kühl- und/oder Schmiermittel verwendete Wasser im Freiraum 12 (Fig. 1) gesammelt und von dort erneut der Entnahmeleitung 32 zugeführt. Beide Kreisläufe sind somit in einem gemeinsamen, von den Statorteilen 1a, 1b und den Deckeln 10a, 10b gebildeten, nach außen hermetisch abgedichteten Gehäuse vereinigt.

Das Ausführungsbeispiel nach Fig. 5 unterscheidet sich von dem nach Fig. 4 nur dadurch, daß die Pumpe 35, wie weiter unten näher beschrieben ist, durch wenigstens eine, in eine Bohrung des mittleren Polschuhs 3 eingebaute und daher unmittelbar in einen Wandler 37 integrierte Kolbenpumpe ersetzt ist. Im Ausführungsbeispiel nach Fig. 5 ist in jedem der beiden mittleren Polschuhe 3 je eine solche Kolbenpumpe 38a, 38b vorgesehen. Je ein Kolben 39a, 39b der Kolbenpumpe 38a, 38b ist vorzugsweise an einem der Stege 24 befestigt, wodurch der Pumpenhub mit dem Hub des Kolbens 14 synchronisiert ist. Im übrigen sind in Fig. 5 die selben Bezugszeichen wie in Figur 4 verwendet.

Fig. 6 bis 10 zeigen weitere Einzelheiten des in den Fig. 1 bis 4 nur schematisch dargestellten Wandlers 28, weshalb gleiche Teile auch dann mit denselben Zeichen versehen sind, wenn sie geringfügige und für die Erfindung unbedeutende Unterschiede im Vergleich zu Fig. 1 bis 4 aufweisen.

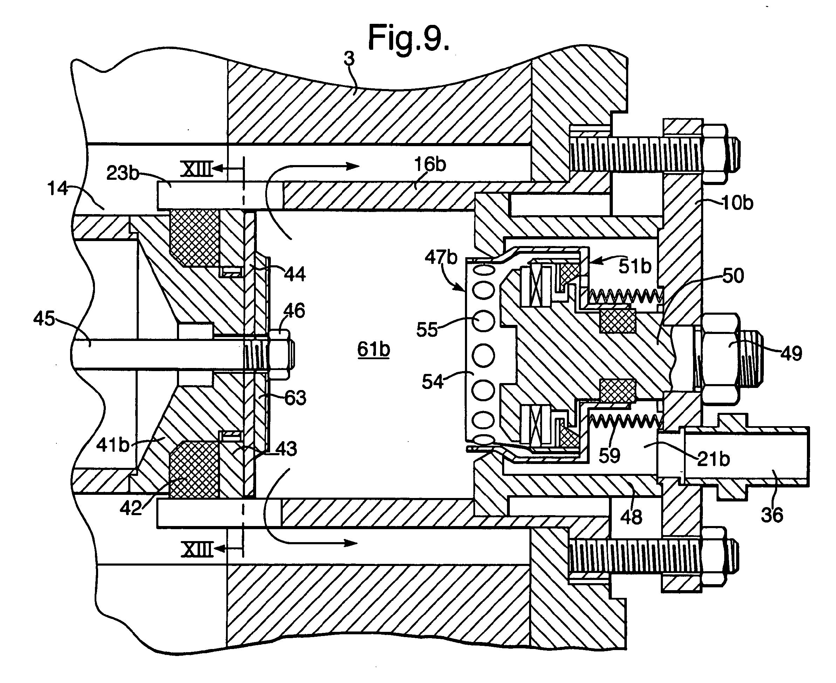

Im Unterschied zu Fig. 3 ist das Rohr 14a des Kolbens 14 an den axialen Enden mit zwei Kolbenböden 41a, 41b versehen, die an ihren äußeren Enden je eine umlaufende, in ihre Umfangsfläche eingearbeitete Nut aufweisen, in die ein Dichtungsring 42 und ein Kolbenring 43 eingelegt sind (Fig. 9). Beide werden jeweils durch von außen anliegende Scheiben 44 in der Nut gehalten, wobei die beiden Scheiben 44 durch eine die Kolbenböden 41a, 41b durchragende Stange 45 und auf deren Enden aufgedrehte Muttern 46 gegen die Kolbenböden 41a, 41b verspannt und dadurch an diesen befestigt werden. Der Dichtungsring 42 kann dabei als Gleitlager wirken und die Dichtwirkung des Kolbenrings 43 unterstützen.

In den axial innen liegenden Enden der in Fig. 3 dargestellten Druckkammern 21a und 21b ist beim Ausführungsbeispiel nach Fig. 6 bis 10 je ein Ventil 47a, 47b angeordnet, die beide spiegelsymmetrisch zur Symmetrieebene 6 liegen und vorzugsweise identisch ausgebildet sind, so daß nachfolgend nur das Ventil 47b näher erläutert wird. Beide Ventile 47a, 47b dienen dem Zweck, eine Selbststeuerung der Schwingungen des Arbeitskolbens 14 herbeizuführen.

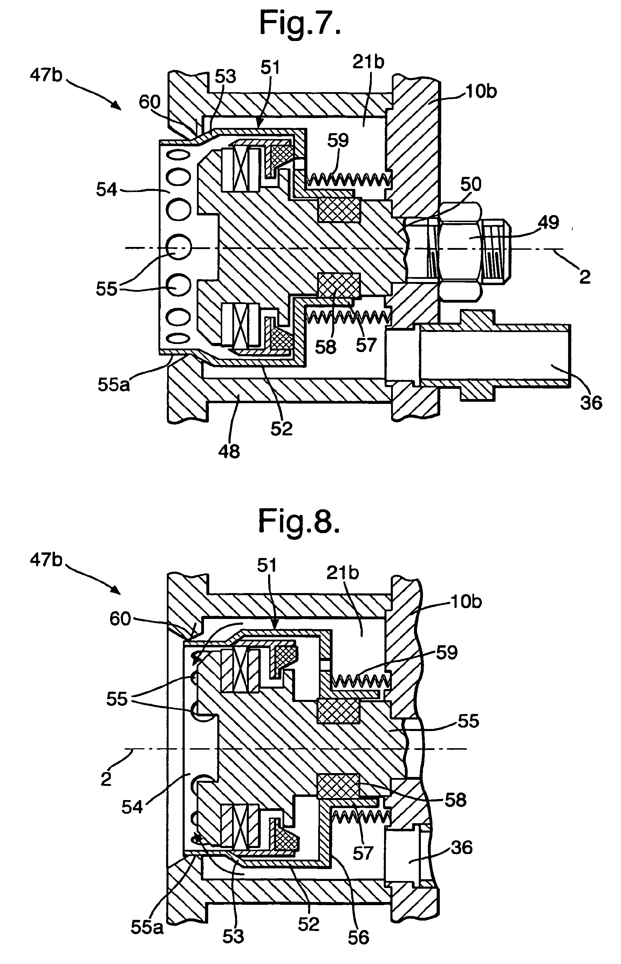

Wie insbesondere Fig. 7, 8 und 9 zeigen enthält das Ventil 47b ein im wesentlichen hohlzylindrisches Gehäuse 48, das koaxial und abgedichtet in das axial äußere Ende des Zylinderabschnitts 16b eingesetzt ist und am Deckel 10b endet. Koaxial in dem Gehäuse 48 sitzt ein mittels einer Schraubverbindung 49 starr am Deckel 10b befestigter, im wesentlichen zylindrischer Führungskörper 50, auf dem ein als Hohlzylinder ausgebildeter Ventilkörper 51 parallel zur Längsachse 2 verschiebbar gelagert ist. Der Ventilkörper 51 enthält einen zylindrischen Mantel 52 (Fig. 7, 8), der zum Kolbenboden 41b hin längs eines konusförmigen Abschnitts 53 in einen zylindrischen Endabschnitt 54 mit reduziertem Querschnitt übergeht, in dem eine Mehrzahl von Öffnungen 55 ausgebildet ist. An seinem vom Endabschnitt 54 entfernten Ende ist der Ventilkörper 51 mit einem senkrecht zur Längsachse 2 abgewinkelten Schulterabschnitt 56 versehen, der in einen koaxial zur Längsachse 2 angeordneten Führungsabschnitt 57 übergeht. Dieser ist mittels eines auch der Abdichtung dienenden, in der Umfangsfläche des Führungskörpers 50 befestigten Gleitlagers 58 verschiebbar am Führungskörper 50 gelagert und mittels wenigstens einer zwischen dem Schulterabschnitt 56 und dem Deckel 10b abgestützten Druckfeder 59 in Richtung des zugehörigen Kolbenbodens 41b vorgespannt.

Das Gehäuse 48 ist an seinem dem Kolbenboden 41b zugewandten Ende mit einem umlaufenden Ventilsitz 60 versehen, wobei die Anordnung derart ist, daß der Ventilkörper 51 in einer Schließstellung des Ventils 47b (Fig.7) mit seinem konusförmigen Abschnitt 53 gegen den Ventilsitz 60 gepreßt und durch die Druckfeder 59 in dieser Geschlossenstellung gehalten wird.

Der in Fig. 7 bis 9 seitlich von der Längsachse 2 abgesetzte Anschluß 36 dient zur Einführung des gas- oder dampfförmigen, z. B. vom Verdampfer 29 (Fig. 4) kommenden Mediums in die vom Gehäuse 48 umschlossene Druckkammer 21b. Diese umgibt den Führungskörper 50 und den Ventilkörper 51 ringförmig und erstreckt sich axial bis zum Ventilsitz 60. Befindet sich das Ventil 47b in der Geschlossenstellung nach Fig. 6, 7 und 9, dann kann das Medium die Druckkammer 21b nicht verlassen, so daß eine axial vor dem Ventil 47b vom Zylinder 16b umschlossene Reaktions- bzw. Expansionskammer 61b im wesentlichen druckfrei bleibt. In diesem Fall befinden sich die Öffnungen 55 sämtlich an einer in axialer Richtung links vom Ventilsitz 60 liegenden Stelle innerhalb der Reaktionskammer 61b.

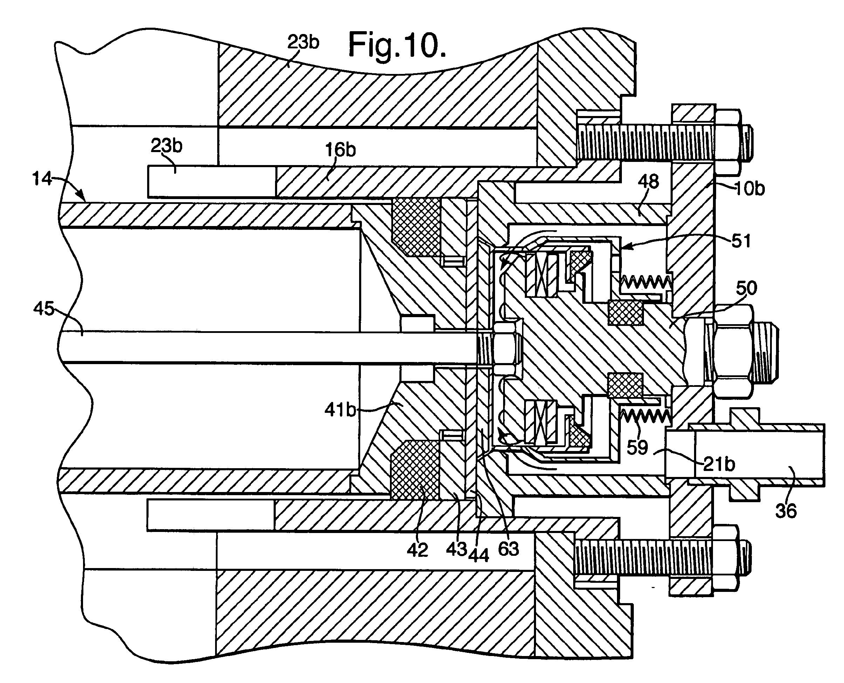

Der Ventilkörper 51 kann gegen den Druck der Druckfedern 59 in Fig. 9 nach rechts in eine aus Fig. 8 und 10 ersichtliche Offenstellung verschoben werden, wobei sein Führungsabschnitt 57 auf dem Gleitlager 58 gleitet. In der Offenstellung ist der konusförmige Abschnitt 53 vom Ventilsitz 60 abgehoben, wodurch gleichzeitig die Öffnungen 55 zumindest teilweise auf der in Fig. 8 rechten Seite des Ventilsitzes 60 zu liegen kommen, wie in Fig. 8 für eine Öffnung 55a angedeutet ist. Infolgedessen kann das gas- oder dampfförmige Medium jetzt in Richtung der in Fig. 8 eingezeichneten Pfeile aus der Druckkammer 21b durch die Öffnungen 55 und den Endabschnitt 54 in die daneben liegende Reaktionskammer 61b einströmen.

Die das Ventil 47a enthaltende Ventilanordnung, die auf der gegenüber liegenden, in Fig. 6 linken Seite des Kolbens 14 angeordnet ist, ist entsprechend ausgebildet, jedoch spiegelsymmetrisch angeordnet. Außerdem stellen die Teile 23a, 23b, 47a, 47b die Steuermittel einer Ventilsteuerung dar, wobei die Auslaßschlitze 23a, 23b wiederum zum Arbeitsraum 12 hin geöffnet sind.

Die Wirkungsweise des anhand der Fig. 6 bis 10 beschriebenen Wandlers ist im wesentlichen wie folgt:
Im Ruhezustand befinden sich der Kolben 14 und die Ankerspule 25 in einer z. B. durch die Federn 27a, 27b (Fig. 4, 5) hergestellten Mittellage, in der beide Ventile 47a, 47b in der Schließstelllung sind. Der Wandler wird dadurch gestartet, daß an die Ankerspule 25 von außen her ein Strom angelegt wird, der von der mit der Ankerspule 25 verbundenen Last und der Leistung abhängig gemacht wird, mit der die Stromwicklungen 8a, 8b betrieben werden. Dabei kann zuvor die Ankerlast in Abhängikeit von dem in den Druckkammern 21a, 21b herrschenden Druck des Arbeitsmediums so angepaßt werden, daß sich nach dem Startvorgang ein optimaler Lauf des Kolbens 14 ergibt. Meistens genügt ein einziger auf diese Weise erzwungener, definierter Hub, um den Wandler in Bewegung zu setzen, worauf die Stromzufuhr zur Ankerspule 25 abgeschaltet wird. Die erforderlichen Berechnungen werden vorzugsweise in einer speziellen Startbox durchgeführt, der zur Kontrolle auch die aktuelle Hublänge übermittelt werden kann, die z.B. mit zwei dem Kolben 14 oder den Stegen 24 oder der Ankerspule 25 zugeordneten Hubsensoren 62 (Fig. 5) gemessen wird.

Es sei angenommen, daß sich der Kolben 14 in Fig. 6 bis 10 nach rechts bewegt. Er gelangt dann gegen Ende seines Hubs in die Nähe des Ventils 47b, wobei etwa in der Reaktionskammer 61b vorhandene, expandierte Restgase komprimiert und durch den noch offenen Auslaßschlitz 23b des Zylinderabschnitts 16b in den Arbeitsraum 12 ausgestoßen werden. Kurz danach wird der Auslaßschlitz 23b vom Kolbenboden 41b geschlossen und die Reaktionskammer 61b mittels des Kolbenrings 43 abgedichtet.

Sobald der Kolbenboden 41b unter ständiger Verkleinerung der Reaktionskammer 61b an den Endabschnitt 54 des Ventils 47b anschlägt, wird der Ventilkörper 51 gegen den Druck der Federn 59 nach rechts bewegt (Fig. 10). Zu diesem Zweck kann der Kolbenboden 41b mit einer in ihrer Form an den Endabschnitt 54 des Ventilkörpers 51 angepaßten Anschlagplatte 63 (Fig. 9, 10) versehen sein, die zwischen der Scheibe 44 und der Mutter 46 angeordnet wird. Der in Fig. 10 rechte Totpunkt des Arbeitskolbens 14 ist z. B. erreicht, wenn die Mutter 46 am Boden einer Aussparung des Führungskörpers 50 anschlägt.

Durch die beschriebene Bewegung des Ventilkörpers 51 wird das Ventil 47b geöffnet. Die Reaktionskammer 61b ist jetzt zur Druckkammer 21b hin geöffnet, so daß das in dieser anstehende Medium durch die zumindest teilweise frei gegebenen Öffnungen 55 in die Reaktionskammer 61b eintreten und dort Arbeit verrichten kann, indem es den Kolben 14 in Fig. 10 nach links drückt und dadurch die Reaktionskammer 61b wieder vergrößert. Dies geht zunächst so lange, bis der Ventilkörper 51 durch die Druckfedern 59 wieder in seine Schließstellung zurückgeführt worden ist.

Auf der in Fig. 6 linken Seite des Wandlers laufen entsprechende Vorgänge ab. Durch Bewegung des Kolbens 14 nach rechts wurde das Ventil 47a in die Schließstellung gebracht und die dortige Reaktionskammer 61a immer mehr vergrößert, bis der Kolbenboden 41a schließlich die Auslaßschlitze 23a im Zylinderabschnitt 16a freigegeben und die Reaktionskammer 61a mit dem Abreitsraum 12 verbunden hatte, um das expandierte Medium in den Arbeitsraum 12 strömen zu lassen. Wenn sich daher der Kolben 14 wie beschrieben nach links bewegt, werden am Anfang dieses Bewegungshubs zunächst etwaige noch in der Reaktionskammer 61a befindliche Restgase durch die Auslaßschlitze 23a in den Arbeitsraum 12 abgegeben, worauf die Auslaßschlitze 23a geschlossen und die Reaktionskammer 61a durch die Dichtung 42 und den Kolbenring 43 des Kolbenbodens 41a abgedichtet wird. Die beschriebenen Vorgänge wiederholen sich dann, da der Kolben 14 jetzt in Richtung des linken Totpunkts wandert, dadurch das Ventil 47a öffnet und von dem in der linken Druckkammer 21b anstehenden Dampf wieder nach rechts beschleunigt wird. Dabei dienen die Reaktionskammern 61a, 61b jeweils als Puffer bzw. als Gasfedern, da sie bei richtiger Dimensionierung und Anordnung der Auslaßschlitze 23a, 23b sicherstellen, daß der Kolben 14 an seinen Totpunkten nicht hart an die Führungskörper 50 der Ventile 47a, 47b oder andere stationäre Teile des Wandlers anschlägt.

Da die Ankerspule 25 durch die Stege 24 mit dem Kolben 14 fest verbunden ist, wird sie mit dem Takt des Kolbens 14 im Stator 1 hin- und her bewegt, wobei in an sich bekannter Weise ein elektrischer Wechselstrom erzeugt wird, der mittels der Federn 27a, 27b abgenommen werden kann.

Das Ausführungsbeispiel nach Fig. 11 zeigt Einzelheiten des nach Fig. 1 bis 3 und Fig. 5 ausgebildeten Wandlers 37, weshalb hier für gleiche Teile wiederum selbst dann gleiche Bezugszeichen verwendet sind, wenn diese Teile geringfügige Unterschiede im Vergleich zu Fig. 1 bis 3 und Fig. 5 aufweisen.

Analog zu Fig. 3 ist der Kolben 14 an beiden Enden mit je einem Kolbenboden 15a bzw. 15b versehen, der die axial nach außen gerichtete Schieber 17a, 17b aufweist, in deren Umfangsflächen die Steuerschlitze 22a, 22b ausgebildet sind. Die Steuerschlitze 22a, 22b treten hier an die Stelle der Ventile 47a, 47b der Ausführungsformen nach Fig. 6 bis 10 und bilden zusammen mit den Stirnscheiben 19a, 19b und den Auslaßschlitzen 23a, 23b je eine zur Selbststeuerung der Kolbenschwingungen bestimmte Schiebersteuerung. Außerdem sind die Steuerschlitze 22a, 22b so an den Schiebern 17a, 17b angeordnet, daß sie bei der Hin- und Herbewegung des Kolbens 14 mit in den Stirnscheiben 19a, 19b angebrachten, radial nach innen ragenden Dichtringen 64a, 64b zusammenwirken.

Ein weiterer Unterschied zum Ausführungsbeispiel nach Fig. 6 bis 10 besteht darin, daß die beiden Kolbenböden 15a, 15b und die angrenzenden Schieber 17a, 17b von einem durchgehenden, koaxialen Rohr 65 durchragt sind, das die beiden Druckkammern 21a, 21b in jeder Lage des Kolbens 14 strömungsmäßig miteinander verbindet. Daher ist nur einer der beiden Anschlüsse 36 der Deckel 10a bzw. 10b zur Zuführung des gas- oder dampfförmigen Arbeitsmediums vorgesehen, während der jeweils andere Anschluß 36 verschlossen wird. In Abhängigkeit von den räumlichen Verhältnissen kann dabei wahlweise der eine oder andere Anschluß 36 zur Zuführung des Arbeitsmediums ausgewählt werden. Das Arbeitsmedium tritt in jedem Fall einerseits in die betreffende Druckkammer 21b und andererseits durch das Rohr 65 hindurch auch in die andere Druckkammer 21a oder umgekehrt ein, so daß in beiden im wesentlichen derselbe Gas- bzw. Dampfdruck herrscht.

Die Wirkungsweise des Ausführungsbeispiels nach Fig. 11 ist im wesentlichen wie folgt:
Nach dem analog zu Fig. 6 bis 10 erfolgenden Startvorgang befindet sich der Kolben 14 z.B. entsprechend Fig. 11 in seiner linken Totpunktlage. In dieser Lage sind die Steuerschlitze 22a beidseitig des Dichtrings 64a angeordnet und daher teils zur Druckkammer 21a, teils zu einer Reaktionskammer 66a hin geöffnet, die sich zwischen der Stirnscheibe 19a und dem zugehörigen Kolbenboden 15a befindet. Das unter Druck stehende Medium kann daher in Richtung der eingezeichneten Pfeile in die Reaktionskammer 66a eintreten, dadurch auf den Kolbenboden 15a einwirken und den gesamten Kolben 14 in Fig. 11 nach rechts bewegen. Nach einem von der axialen Länge der Steuerschlitze 22a abhängigen Wegstrecke gelangen diese völlig auf die in Fig. 11 rechte Seite des Dichtrings 64a bzw. der Stirnscheibe 19a, so daß jetzt nur noch das in der Reaktionskammer 66a befindliche Medium auf den Kolbenboden 15a einwirken kann.

Analog zur obigen Beschreibung des ersten Ausführungsbeispiels sind in dieser Phase die Auslaßschlitze 23b auf der gegenüberliegenden Seite noch offen, so daß in einer dort befindlichen Reaktionskammer 66b etwa verbliebene, expandierte Restgase durch die Auslaßschlitze 23b in den Arbeitsraum 12 abgegeben werden können. Nach einer gewissen Bewegung des Kolbens 14 nach rechs werden die Auslaßschlitze 23b jedoch vom zugehörigen Kolbenboden 15b geschlossen, worauf sich die Kolbenringe 20b an den Zylinderabschnitt 16b anlegen. Zum gleichen Zeitpunkt liegt der Dichtring 64b noch am zugehörigen, rechten Schieber 17b an, so daß die Reaktionskammer 66b hermetisch abgedichtet ist und das gas- oder dampfförmige Medium nicht in sie eintreten kann.

Bei der weiteren Bewegung des Arbeitskolbens 14 nach rechts wird die linke Reaktionskammer 66a zunehmend vergrößert, die rechte Reaktionskammer 65b dagegen unter Bildung eines Puffers immer mehr verkleinert, wodurch ein hartes Anschlagen des Kolbenbodens 15b an die Stirnscheibe 19b vermieden wird. Kurz vor diesem Anschlag gelangen außerdem die Steuerschlitze 22b in den Bereich des Dichtrings 64b, bis sie schließlich eine strömungsmäßige Verbindung zwischen der Druckkammer 21b und der Reaktionskammer 66b herstellen und die Bewegungsrichtung des Kolbens 14 daher allmählich umgekehrt wird. Es werden dann automatisch dieselben Verfahrensschritte vollzogen, wie sie oben für die linke Seite des Wandlers 37 beschrieben sind.

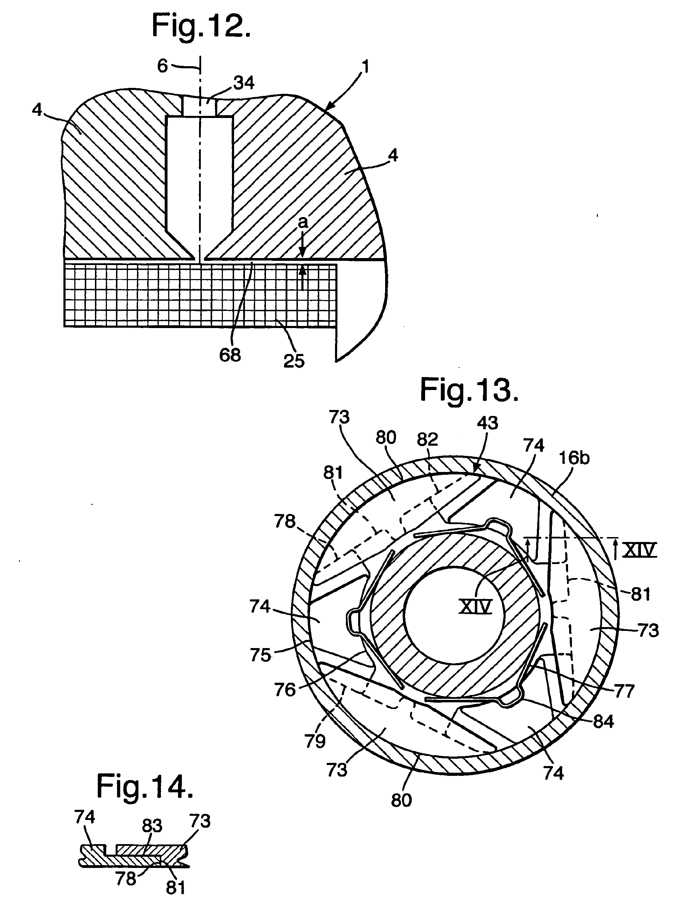

Wie Fig. 11 weiter zeigt, gelangt das Kühl- und/oder Schmiermittel, das entsprechend Fig. 4 und 5 über die Zuführleitung 34 in den Stator 1 eingeführt wird, über einen in diesem augebildeten Kanal 67 in einen in Fig. 12 vergrößert dargestellten, zwischen den Polschuhen 4 und der Ankerspule 25 befindlichen Ringraum 68 mit einer radialen Tiefe. Das Kühl- und Schmiermittel kann daher die Ankerspule 25 und die Polschuhe 4 in Umfangsrichtung umspülen und daher diese sowie die Wicklungen 8a, 8b kühlen, bis es über die axialen Enden der Ankerspule 25 in den Arbeitsraum 12 gelangt und über die Entnahmeleitung 32 aus diesem abgezogen wird.

Weiter zeigt Fig. 11, daß in der Nähe der Druckkammern 21a, 21b und unterhalb von diesen je eine der Kolbenpumpen 38a, 38b gemäß Fig. 5 angeordnet ist. Jede dieser Kolbenpumpen 38a, 38b enthält einen im mittleren Polschuh 3 ausgebildeten, durch eine Bohrung hergestellten Zylinder 69, oberhalb von dem eine am Boden des Arbeitsraumes 12 vorgesehene Sammelrinne 70 angeordnet ist, die durch eine Öffnung 71 mit dem Zylinder 69 in Verbindung steht. In dem Zylinder 69 kann sich außerdem ein nicht näher dargestellter, mit der zugehörigen Kolbenstange 39a, 39b verbundener Kolben hin- und herbewegen.

Ein Teil des als Kühl- und Schmiermittel verwendeten Wassers sowie Wasser, das im Arbeitsraum 12 durch Kondensation des durch die Auslaßschlitze 23a, 23b eintretenden Dampfs erhalten wird, kann bei diesem Ausführungsbeispiel über die Sammelrinnen 70 und die Öffnung 71 in den Zylinder 69 gelangen und aus diesem durch eine Austrittsleitung 72 gemäß Fig. 5 und 11 dem Verdampfer 29 zugeführt werden. Dadurch steht diesem jeweils genügend Wasser (z.B. 0,3 bis 0,5 l/min) zur Erzeugung des im Wandler 37 benötigten Dampfs zur Verfügung, ohne daß eine zusätzliche externe Speisewasserpumpe benötigt wird. Dabei versteht sich, daß den Kolbenpumpen 38a, 38b zusätzlich auch alle erforderlichen Ventile oder dgl. zugeordnet werden, die zur Durch führung der Pumpenhübe erforderlich sind, die im Rhythmus der Bewegung des Kolbens 14 erfolgen.

Fig. 13 und 14 zeigen ein bevorzugtes Ausführungsbeispiel für den u.a. in Fig. 9 dargestellten Kolbenring 43, der zwischen dem Kolbenboden 41b und dem Zylinder 16b angeordnet ist. Im Interesse einer möglichst großen Standzeit und der gleichzeitigen leichten Wartung sobald die Verschleißgrenze erreicht wird, sind die Kolbenringe 43 aus einer Mehrzahl von überlappt angeordneten und gegeneinander verschiebbaren Elementen zusammengesetzt. Die keilförmigen Elemente 74 können dabei vorteilhaft aus weicherem Material als die kreissegmentförmigen Elemente 73 gebildet werden. Dadurch wird eine dauerhafte Abdichtung gegenüber der Zylinderwand 16b gewährleistet. Wie Fig. 13 zeigt, wechseln sich in Umfangsrichtung erste, kreissegmetförmige Elemente 73 mit zweiten, keilförmig ausgebildeten Elementen 74 ab. Im Ausführungsbeispiel sind je drei Elemente 73 und dazwischen liegende Elemente 74 vorgesehen. Die keilförmigen Elemente 74 sind im wesentlichen trapezförmig ausgebildet, wobei eine am Innenmantel des umgebenden Zylinders 16b zu liegen kommende, kürzere, als Dichtfläche 75 wirksame Seite entsprechend der Innenkontur des Zylinderabschnitts 16b abgerundet ist, während die längere Seite 76 dem zugeordneten Kolbenboden 41b gegenüber steht. Zwischen beiden ist eine dachförmige, z.B. als Blattfeder ausgebildete Feder 77 angeordnet, die das Element 74 radial nach außen drückt und in Anlage mit dem Zylinderabschnitt 16b hält. Die beiden die Seiten 75, 76 verbindenden Schenkel 78 und 79 des Elements 74 sind keilförmig ausgebildet und laufen von innen nach außen aufeinander zu.

Die kreissegmentförmigen Elemente 73 sind an ihrer vom Kolbenboden 41b abgewandten Seite ebenfalls als Dichtflächen 80 ausgebildet und an die Innenkontur des Zylinderabschnitts 16b angepaßt. Sie weisen außerdem den Schenkeln 78, 79 zugewandte und an diesem anliegende Mitnehmerflächen 81, 82 auf. Dadurch ergibt sich der Vorteil, daß die Elemente 74, die mittels der Federn 77 radial nach außen vorgespannt sind, mit ihren Schenkeln bzw. Keilflächen 78, 79 auch auf die Mitnehmerflächen 81, 82 der benachbarten Elemente 73 einwirken und deren Dichtflächen 80 daher ebenfalls radial nach außen gegen die Innenwand des Zylinderabschnitts 16b drücken. Dadurch werden die Elemente 73, 74 bei einem etwaigen Verschleiß der Dichtflächen 75, 80 automatisch radial nachgeführt.

Die Elemente 73, 74 werden so angeordnet, daß an den Gleitflächen kein Spalt entsteht. Im Bereich der Elemente 73, 74 sind diese Gleitflächen so überlappt angeordnet, wie sich insbesondere aus Fig. 14 ergibt. Beide Elemente 73, 74 besitzen in einer dadurch erhaltenen Überlappungszone 83 z. B. jeweils die halbe Wandstärke.

Die dachförmigen Federn 77 sind vorzugsweise mit im Dachbereich vorgesehenen Ösen 84 in entsprechende Ausnehmungen der Elemente 74 eingeclipst und dadurch lösbar mit diesen verbunden, während die Anlageflächen ihrer Schenkel zweckmäßig in Nuten liegen, die im Mantel des Kolbenbodens 41b ausgebildet sind. Im übrigen ist klar, daß der Kolbenboden 41a mit einem entsprechenden Kolbenring 43 versehen sein kann und daß die Kolbenringe 64a, 64b nach Fig. 11 im wesentlichen wie die Kolbenringe 43 ausgebildet sein können.

Die Zylinderabschnitte bestehen vorzugsweise aus Stahl oder mit Antimon getränkter Kunstkohle, während die Kolbenringelemente 73, 74 z. B. aus weicherem, relativ zu den Zylinderabschnitten schneller verschleißendem Material hergestellt werden. Damit wird sichergestellt, daß bei einer Wartung nur die einfacher zu tauschenden Ringe gewechselt werden müssen.

Die Erfindung ist nicht auf die beschriebenen Ausführungsbeispiele beschränkt, die in vielfacher Weise abgewandelt werden können, obwohl die beschriebene Bauweise den Vorteil einer kontruktiv sehr einfach zu verwirklichenden und klein bauenden Anordnung mit sich bringt. Beispielsweise können anstelle der beschriebenen Ventil- und Schiebersteuerungen auch andere Steuerungen vorgesehen werden. Insbesondere könnte der Kolben 14 anstatt z.B. mit Dampf auch mit Verbrennungsgasen oder üblichen Kraftstoffen wie Benzin oder dgl. betrieben werden, in welchem Fall die in die Druckräume eingebrachten Gase mit zusätzlichen Hilfsmitteln im gewünschten Takt gezündet bzw. zur Explosion gebracht werden müßten. Weiterhin wäre es möglich, die in den Zylinderabschnitten 16a, 16b vorgesehenen Dichtringe (z.B. 64a, 64b) analog zu den Kolbenringen nach Fig. 13 und 14 auszubilden, damit sie wie diese arbeiten und sich bei Verschleiß selbst nachstellen. Es müßten in diesem Fall allerdings Federn, z.B. Ringfedern, vorgesehen werden, die radial nach innen statt radial nach außen wirken. Weiterhin ist es möglich, die als Druckkammern 21a, 21b bezeichneten Räume ganz wegzulassen und nur die Anschlußstutzen 36 und/oder mit diesen verbundene Schläuche als Druckräume zu betrachten. Wichtig für die beschriebene Funktion ist allein, daß die Druckräume 21a, 21b jeweils Quellen bzw. Zuführeinrichtungen für das unter Druck stehende Medium darstellen und zu den richtigen Zeitpunkten zu den Reaktionsräumen hin geöffnet sind. Die Quellen können daher auch durch Geräte realisiert werden, welche das unter Druck stehende Medium unmittelbar erzeugen. Weiter zeigen insbesondere Fig. 6 und 11, daß die Deckel 10a, 10b auch mit axialen Abständen von den Böden 5 der Polschuhe 4 angeordnet und die Zylinder 16a, 16b axial weiter nach außen verlegt werden können. Wichtig ist in diesem Zusammenhang nur, daß die Auslaßschlitze 23a, 23b in irgendeiner Weise in den Arbeitsraum 12 münden, um das expandierte Medium stets in diesen einzuführen (vgl. insoweit auch Fig. 4 und 5), und daß die Deckel 10a, 10b bzw. Böden 5 nicht von bewegten Teilen wie z.B. dem Kolben 14 durchragt werden, was zu Dichtproblemen führen würde. Schließlich versteht sich, daß die verschiedenen Merkmale auch in anderen als in den dargestellten und beschriebenen Kombinationen angewendet werden können.

## Patentansprüche

1. Elektromechanischer Energiewandler für ein gas- oder dampfförmiges Medium, enthaltend: einen Stator (1) mit zwei topfförmig ausgebildeten, zu je einer Stirnseite hin offenen und mit diesen Stirnseiten längs einer Symmetrieebene (6) spiegelsymmetrisch aneinander grenzenden Statorteilen (1a, 1b), die ein Arbeitsraum (12) umgeben und einen gemeinsamen, magnetisch durchfluteten Luftspalt (7) bilden, eine in dem Luftspalt (7) verschiebbar angeordnete, eisenlose Ankerspule (25), einen im Arbeitsraum (12) frei schwingend angeordneten, mit der Ankerspule (25) verbundenen Kolben (14), wenigstens eine Quelle (21a, 21b) für das Medium, zwei je einem Boden (15a, 15b; 41a, 41b) des Kolbens (14) zugeordnete Reaktionskammern (61a, 66a; 61b, 66b) und den Reaktionskammern (61a, 66a; 61b, 66b) zugeordnete, zur Selbststeuerung der Kolbenschwingungen bestimmte Steuermittel (17a, 19a, 22a, 23a, 47a; 17b, 19b, 22b, 23b, 47b), **dadurch gekennzeichnet, daß** mittels der Steuermittel die Reaktionskammern (61a, 66a; 61b, 66b) während der Kolbenschwingungen zur Aufnahme von unter Druck stehendem Medium zur Quelle (21a, 21b) hin und zur Abgabe von expandiertem Medium zum Arbeitsraum (12) hin geöffnet werden können.

2. Energiewandler nach Anspruch 1, **dadurch gekennzeichnet, daß** die Statorteile (1a, 1b) je einen mittleren Polschuh (3) und einen diesen umgebenden, äußeren Polschuh (4) aufweisen.

3. Energiewandler nach Anspruch 1 oder 2, **dadurch gekennzeichnet, daß** die Statorteile (1a, 1b) rotationssymmetrisch zu einer Längsachse (2) des Kolbens (14) ausgebildet sind.

4. Energiewandler nach Anspruch 3, **dadurch gekennzeichnet, daß** die mittleren Polschuhe (3) mit je einem zur Längsachse (2) koaxialen, den Arbeitsraum umgebenden und den Kolben (14) aufnehmenden Durchgang (9) versehen sind und die Ankerspule (25) durch radiale, nach innen ragende Stege (24) mit dem Kolben (14) verbunden ist.

5. Energiewandler nach Anspruch 4, **dadurch gekennzeichnet, daß** in jedem Durchgang (9) ein zur Längsachse (2) koaxialer und nach außen mit einem Deckel (10a, 10b) verschlossener Zylinderabschnitt (16a, 16b) abgedichtet eingesetzt ist und der Kolben (14) an seinen Enden mit je einem, in einem zugeordneten Zylinderabschnitt (16a, 16b) abgedichtet und derart verschiebbar gelagerten Kolbenboden (15a, 15b; 41a, 41b) versehen ist, daß zwischen jedem der Deckel (10a, 10b) und dem zugeordneten Kolbenboden (15a, 15b; 41a, 41b) eine die Quelle (21a, 21b) bildende Druckkammer für das gas- oder dampfförmige Medium entsteht.

6. Energiewandler nach Anspruch 5, **dadurch gekennzeichnet, daß** wenigstens einer der Deckel (10a, 10b) mit einem Anschluß (36) zur Zuführung und/oder Entnahme des Mediums versehen ist.

7. Energiewandler nach Anspruch 5 oder 6, **dadurch gekennzeichnet, daß** die beiden Druckräume (21a, 21b) durch einen den Arbeitskolben (14) durchsetzenden Hohlraum (45) strömungsmäßig miteinander verbunden sind.

8. Energiewandler nach einem der Ansprüche 1 bis 7, **dadurch gekennzeichnet, daß** die Steuermittel (17a, 19a, 22a, 23a, 47a; 17b, 19b, 22b, 23b, 47b) nach Art einer Ventil- und/oder Schiebersteuerung ausgebildet sind.

9. Energiewandler nach Anspruch 8, **dadurch gekennzeichnet, daß** die Steuermittel (17a, 19a, 22a, 23a, 47a; 17b, 19b, 22b, 23b, 47b) an axial innen liegenden Enden der beiden Zylinderabschnitte (16a, 16b) angeordnete Austrittsschlitze (23a, 23b) für das Medium und die Kolbenböden (15a, 15b; 41a, 41b) diesen zugeordnete Dichtmittel (20a, 20b; 43) aufweisen.

10. Energiewandler nach Anspruch 8 oder 9, **dadurch gekennzeichnet, daß** die Ventilsteuerung je ein in den Zylinderabschnitten (16a, 16b) angeordnetes durch die zugeordneten Kolbenböden (41a, 41b) betätigtbares Ventil (47a, 47b) enthält.

11. Energiewandler nach Anspruch 8 oder 9, **dadurch gekennzeichnet, daß** die Schiebersteuerung am Umfang der Kolbenböden (15a, 15b) ausgebildete Steuerschlitze (22a, 22b) aufweist und die Zylinderabschnitte (16a, 16b) mit diesen zugeordneten Dichtmitteln (64a, 64b) versehen sind.

12. Energiewandler nach einem der Ansprüche 1 bis 11, **dadurch gekennzeichnet, daß** die Ankerspule (25) mit wenigstens einer sowohl der Stromzufuhr bzw. Stromentnahme als auch der Mittenzentrierung dienenden Feder (27a, 27b) verbunden ist.

13. Energiewandler nach einem der Ansprüche 1 bis 12, **dadurch gekennzeichnet, daß** der Stator (1) wenigstens je eine zur Zuführung bzw. Entnahme eines Kühl- und/oder Schmiermittels bestimmte, in den Arbeitsraum (12) mündende Zuführ- bzw. Entnahmeleitung (34, 32) aufweist.

14. Energiewandler nach Anspruch 13, **dadurch gekennzeichnet, daß** die Entnahmeleitung (32) mit wenigstens zwei Ausgängen versehen ist und der Arbeitsraum (12) über eine Sammelrinne (70) und eine Pumpe (38a, 38b) mit wenigstens einem der Ausgänge in Verbindung steht.

15. Energiewandler nach Anspruch 14, **dadurch gekennzeichnet, daß** die Pumpe (38a, 38b) eine einen Pumpenkolben (39a, 39b) aufweisende, in den Stator (1) integrierte Kolbenpumpe ist und der Pumenkolben (39a, 39b) mit dem Arbeitskolben (14) antriebsmäßig verbunden ist.

16. Energiewandler nach Anspruch 14 oder 15, **dadurch gekennzeichnet, daß** er einen Verdampfer (29) enthält, der einen mit dem Anschluß (36) des Deckels (10a, 10b) verbundenen Ausgang aufweist, daß das Medium Wasserdampf ist und daß der mit der Pumpe verbundene (38a, 38b) erste Ausgang mit einem Eingang des Verdampfers (29) verbunden ist.

17. Energiewandler nach einem der Ansprüche 14 bis 16, **dadurch gekennzeichnet, daß** das Kühl- und/oder Schmiermittel Wasser ist und wenigstens ein zweiter Ausgang über eine weitere Pumpe (31) mit einem an die Zuführleitung (34) angeschlossenen Wärmeaustauscher (33) verbunden ist.

18. Energiewandler nach einem der Ansprüche 9 bis 17, **dadurch gekennzeichnet, daß** zumindest die den Kolbenböden (15a, 15b; 41a, 41b) zugeordneten Dichtmittel (20a, 20b; 43) aus radial von den Kolbenböden (15a, 15b; 41a, 41b) vorstehenden Kolbenringen bestehen, die aus überlappt ausgeordneten und gegeneinander verschiebbaren Elementen (73, 74) zusammengesetzt sind.

19. Energiewandler nach Anspruch 18, **dadurch gekennzeichnet, daß** die Elemente (73, 74) in Umfangsrichtung der Kolbenringe (20a, 20b; 43) abwechselnd aus kreissegmentförmigen, ersten Elementen (73) und aus durch Federn (77) radial vorgespannten, zweiten Elementen ((74) zusammengesetzt sind, die auf die ersten Elemente (73) einwirkende Keilflächen ((78, 79) aufweisen.

20. Energiewandler nach einem der Ansprüche 1 bis 19, **dadurch gekennzeichnet, daß** die Ankerspule (25) durch Schlitze (11) des Stators hindurch mit dem Kolben (14) verbunden ist.

## Claims

1. Electromechanical energy converter for a medium in gas or vapour form containing: a stator (1) with two cup-shaped stator parts (1a, 1b), which are open towards a respective face and mirror-symmetrically adjoin one another at these faces along a plane of symmetry (6) and which stator parts surround a working space (12) and form a common air gap (7) with magnetic flux flowing through it, an air-core armature coil (25) displaceably arranged in the air gap (7), a piston (14) arranged to oscillate freely in the working space (12) and connected to the armature coil (25), at least one source (21a, 21b) for the medium, two reaction chambers (61a, 66a; 61b, 66b) associated with a respective head (15a, 15b; 41a, 41b) of the piston (14) and control elements (17a, 19a, 22a, 23a, 47a; 17b, 19b, 22b, 23b, 47b) associated with the reaction chambers (61a, 66a; 61b, 66b) and intended for automatic control of the piston oscillations, **characterised in that** during the piston oscillations the reaction chambers (61a, 66a; 61b, 66b) can be opened by means of the control elements towards the source (21a, 21b) to receive pressurised medium and towards the working space (12) to discharge expanded medium.

2. Energy converter according to claim 1, **characterised in that** the stator parts (1a, 1b) respectively have a central pole shoe (3) and an outer pole shoe (4) surrounding this.

3. Energy converter according to claim 1 or 2, **characterised in that** the stator parts (1a, 1b) are configured rotationally symmetrically to a longitudinal axis (2) of the piston (14).

4. Energy converter according to claim 3, **characterised in that** the central pole shoes (3) are respectively provided with a passage (9), which is coaxial to the longitudinal axis (2), surrounds the working space and receives the piston (14), and the armature coil (25) is connected to the piston (14) by radial, inwardly projecting webs (24).

5. Energy converter according to claim 4, **characterised in that** a cylinder section (16a, 16b) coaxial to the longitudinal axis (2) and closed to the outside by a cover (10a, 10b) is placed and sealed in each passage (9) and the piston (14) is provided at its ends with a respective piston head (15a, 15b; 41a, 41b) sealed in an associated cylinder section (16a, 16b) and displaceably disposed in such a manner that a pressure chamber forming the source (21a, 21b) is formed for the medium in gas or vapour form between each of the covers (10a, 10b) and the associated piston head (15a, 15b; 41a, 41b).

6. Energy converter according to claim 5, **characterised in that** at least one of the covers (10a, 10b) is provided with a connection (36) for the supply and/or removal of the medium.

7. Energy converter according to claim 5 or 6, **characterised in that** the two pressure chambers (21a, 21b) are connected to one another with respect to flow by a cavity (45) passing through the working piston (14).

8. Energy converter according to one of claims 1 to 7, **characterised in that** the control elements (17a, 19a, 22a, 23a, 47a; 17b, 19b, 22b, 23b, 47b) are configured in the manner of a valve and/or slide control means.

9. Energy converter according to claim 8, **characterised in that** the control elements (17a, 19a, 22a, 23a, 47a; 17b, 19b, 22b, 23b, 47b) have outlet slits (23a, 23b) arranged on ends lying axially on the inside of the two cylinder sections (16a, 16b) for the medium and the piston heads (15a, 15b; 41a, 41b) have sealing elements (20a, 20b; 43) associated with these.

10. Energy converter according to claim 8 or 9, **characterised in that** the valve control means contains a respective valve (47a, 47b), which is arranged in the cylinder sections (16a, 16b) and can be operated through the associated piston heads (41a, 41b).

11. Energy converter according to claim 8 or 9, **characterised in that** the slide control means has control slits (22a, 22b) configured on the periphery of the piston heads (15a, 15b) and the cylinder sections (16a, 16b) are provided with sealing elements (64a, 64b) associated therewith.

12. Energy converter according to one of claims 1 to 11, **characterised in that** the armature coil (25) is connected to at least one spring (27a, 27b) serving both for current supply or current removal and for centring the centres.

13. Energy converter according to one of claims 1 to 12, **characterised in that** the stator (1) has at least one respective supply or removal pipe (34, 32) opening into the working space (12) for the supply or removal of a coolant and/or lubricant.

14. Energy converter according to claim 13, **characterised in that** the removal pipe (32) is provided with at least two outlets and the working space (12) connects to at least one of the outlets by means of a collecting channel (70) and a pump (38a, 38b).

15. Energy converter according to claim 14, **characterised in that** the pump (38a, 38b) is a reciprocating pump, which is integrated into the stator (1) and has a pump ram (39a, 39b), and the pump ram (39a, 39b) is connected to the working piston (14) with respect to drive.

16. Energy converter according to claim 14 or 15, **characterised in that** it contains an evaporator (29), which has an outlet connected to the connection (36) of the cover (10a, 10b), that the medium is water vapour and that the first outlet connected to the pump (38a, 38b) is connected to an inlet of the evaporator (29).

17. Energy converter according to one of claims 14 to 16, **characterised in that** the coolant and/or lubricant is water and at least one second outlet is connected by means of a further pump (31) to a heat exchanger (33) connected to the supply pipe (34).

18. Energy converter according to one of claims 9 to 17, **characterised in that** at least the sealing elements (20a, 20b; 43) associated with the piston heads (15a, 15b; 41a, 41b) comprise piston rings, which project radially from the piston heads (15a, 15b; 41a, 41b) and consist of overlapping elements (73, 74) that are displaceable relative to one another.

19. Energy converter according to claim 18, **characterised in that** in the peripheral direction of the piston rings (20a, 20b; 43) the elements (73, 74) consist alternately of circular segment-shaped first elements (73) and second elements (74), which are radially biased by means of springs (77) and have wedge faces (78, 79) acting on the first elements (73).

20. Energy converter according to one of claims 1 to 19, **characterised in that** the armature coil (25) is connected through slits (11) of the stator to the piston (14).

## Revendications

1. Convertisseur d'énergie électromécanique pour un milieu à l'état de gaz ou de vapeur, contenant : un stator (1) avec deux parties de stator (1a, 1b) en forme de pot, ouvertes chaque fois vers une face frontale et adjacentes l'une à l'autre par ces faces frontales avec une symétrie en miroir le long d'un plan de symétrie (6), qui entourent un volume de travail (12) et forment un entrefer (7) commun, traversé par un flux magnétique, une bobine d'induit (25) sans fer, disposée dans l'entrefer (7) avec possibilité de déplacement, un piston (14) disposé dans le volume de travail (12) de manière à pouvoir osciller librement, relié à la bobine d'induit (25), au moins une source (21a, 21b) pour le milieu, deux chambres de réaction (61a, 66a; 61b, 66b) associées chaque fois à un fond (15a, 15b ; 41a, 41b) du piston (14) et des moyens de commande (17a, 19a, 22a, 23a, 47a ; 17b, 19b, 22b, 23b, 47b) associés aux chambres de réaction (61a, 66a ; 61b, 66b), destinés à la commande automatique des oscillations du piston, **caractérisé en ce qu'**au moyen des moyens de commande, les chambres de réaction (61a, 66a ; 61b, 66b) peuvent être ouvertes pendant les oscillations du piston vers la source (21a, 21b) pour recevoir le milieu sous pression et vers le volume de travail (12) pour délivrer le milieu expansé.

2. Convertisseur d'énergie selon la revendication 1, **caractérisé en ce que** les parties de stator (1a, 1b) présentent chaque fois une pièce polaire centrale (3) et une pièce polaire extérieure (4) entourant celle-ci.

3. Convertisseur d'énergie selon la revendication 1 ou 2, **caractérisé en ce que** les parties de stator (1a, 1b) sont réalisée avec une symétrie de révolution par rapport à un axe longitudinal (2) du piston (14).

4. Convertisseur d'énergie selon la revendication 3, **caractérisé en ce que** les pièces polaires centrales (3) sont pourvues chaque fois d'un passage (9) coaxial à l'axe longitudinal (2), entourant le volume de travail et recevant le piston (14) et que la bobine d'induit (25) est reliée au piston (14) par des branches (24) radiales faisant saillie vers l'intérieur.

5. Convertisseur d'énergie selon la revendication 4, **caractérisé en ce qu'**une section cylindrique (16a, 16b) coaxiale à l'axe longitudinal (2) et fermée vers l'extérieur par un couvercle (10a, 10b) est insérée de manière étanche dans chaque passage (9) et le piston (14) est pourvu à ses extrémités chaque fois d'un fond de piston (15a, 15b ; 41a, 41b) monté dans une section cylindrique associée (16a, 16b) de manière étanche et déplaçable de telle manière qu'il se crée entre chacun des couvercles (10a, 10b) et le fond de piston associé (15a, 15b ; 41a, 41b) une chambre de pression formant la source (21a, 21b) pour le milieu à l'état de gaz ou de vapeur.

6. Convertisseur d'énergie selon la revendication 5, **caractérisé en ce qu'**au moins un des couvercles (10a, 10b) est pourvu d'un raccord (36) pour amener et/ou prélever le milieu.

7. Convertisseur d'énergie selon la revendication 5 ou 6, **caractérisé en ce que** les deux chambres de pression (21a, 21b) sont reliées entre elles fluidiquement par une cavité (45) traversant le piston de travail (14).

8. Convertisseur d'énergie selon une des revendications 1 à 7, **caractérisé en ce que** les moyens de commande (17a, 19a, 22a, 23a, 47a ; 17b, 19b, 22b, 23b, 47b) sont réalisés à la manière d'une commande de soupapes et/ou de distributeur.

9. Convertisseur d'énergie selon la revendication 8, **caractérisé en ce que** les moyens de commande (17a, 19a, 22a, 23a, 47a ; 17b, 19b, 22b, 23b, 47b) présentent des fentes de sortie (23a, 23b) pour le milieu disposées à des extrémités axialement intérieures des deux sections cylindriques (16a, 16b) et les fonds de piston (15a, 15b ; 41a, 41b) des moyens d'étanchéité (20a, 20b ; 43) associés à ceux-ci.

10. Convertisseur d'énergie selon la revendication 8 ou 9, **caractérisé en ce que** la commande de soupapes contient chaque fois une soupape (47a, 47b) disposée dans les sections cylindriques (16a, 16b), pouvant être actionnée par les fonds de pistons associés (41a, 41b).

11. Convertisseur d'énergie selon la revendication 8 ou 9, **caractérisé en ce que** la commande de distributeur présente des fentes de commande (22a, 22b) formées à la périphérie des fonds de piston (15a, 15b) et les sections cylindriques (16a, 16b) sont pourvues de moyens d'étanchéité (64a, 64b) associées à celles-ci.

12. Convertisseur d'énergie selon une des revendications 1 à 11, **caractérisé en ce que** la bobine d'induit (25) est reliée à au moins un ressort (27a, 27b) servant aussi bien à l'amenée de courant, respectivement au prélèvement de courant, qu'au centrage.

13. Convertisseur d'énergie selon une des revendications 1 à 12, **caractérisé en ce que** le stator (1) présente au moins une ligne d'amenée et une ligne de prélèvement, (34, 32) destinées respectivement à l'amenée et au prélèvement d'un moyen de refroidissement et/ou de lubrification, débouchant dans le volume de travail (12).

14. Convertisseur d'énergie selon la revendication 13, **caractérisé en ce que** la ligne de prélèvement (32) est pourvue d'au moins deux sorties et le volume de travail (12) est en communication avec au moins une des sorties par l'intermédiaire d'un conduit collecteur (70) et d'une pompe (38a, 38b).

15. Convertisseur d'énergie selon la revendication 14, **caractérisé en ce que** la pompe (38a, 38b) est une pompe à piston présentant un piston de pompe (39a, 39b), intégrée dans le stator (1) et le piston de pompe (39a, 39b) est relié en entraînement au piston de travail (14).

16. Convertisseur d'énergie selon la revendication 14 ou 15, **caractérisé en ce qu'**il contient un évaporateur (29) qui présente une sortie reliée au raccord (36) du couvercle (10a, 10b), que le milieu est de la vapeur d'eau et que la première sortie reliée à la pompe (38a, 38b) est reliée à une entrée de l'évaporateur (29).

17. Convertisseur d'énergie selon une des revendications 14 à 16, **caractérisé en ce que** le moyen de refroidissement et/ou de lubrification est de l'eau et qu'au moins une deuxième entrée est reliée par l'intermédiaire d'une autre pompe (31) à un échangeur thermique (33) raccordé à la ligne d'amenée (34).

18. Convertisseur d'énergie selon une des revendications 9 à 17, **caractérisé en ce qu'**au moins les moyens d'étanchéité (20a, 20b ; 43) associés aux fonds de piston (15a, 15b ; 41a, 41b) sont composés de segments de piston faisant saillie radialement des fonds de piston (15a, 15b ; 41a, 41b), qui sont formés d'éléments (73, 74) disposés avec recouvrement et déplaçables les uns par rapport aux autres.

19. Convertisseur d'énergie selon la revendication 18, **caractérisé en ce que** les éléments (73, 74) sont composés de premiers éléments (73) en forme de segment de cercle, alternant en direction périphérique des segments de piston (20a, 20b ; 43) et de deuxièmes éléments (74) précontraints radialement par des ressorts (77), qui présentent des surfaces cunéiformes (78, 79) qui agissent sur les premiers éléments (73).

20. Convertisseur d'énergie selon une des revendications 1 à 19, **caractérisé en ce que** la bobine d'induit (25) est reliée au piston (14) à travers des fentes (11) du stator.
